(19) Europäisches Patentamt
European Patent Office
Office européen des brevets

(11) **EP 4 395 108 A1**

(12) **EUROPEAN PATENT APPLICATION**
published in accordance with Art. 153(4) EPC

(43) Date of publication:
**03.07.2024 Bulletin 2024/27**

(21) Application number: **22860988.9**

(22) Date of filing: **05.07.2022**

(51) International Patent Classification (IPC):
*H02J 7/00* (2006.01)       *H01M 50/50* (2021.01)
*H01M 50/509* (2021.01)    *H01M 50/583* (2021.01)
*H02H 7/18* (2006.01)       *H02J 7/02* (2016.01)
*H02J 7/04* (2006.01)       *H02J 13/00* (2006.01)
*H02J 15/00* (2006.01)

(52) Cooperative Patent Classification (CPC):
**H01M 50/50; H01M 50/509; H01M 50/583;
H02H 7/18; H02J 7/00; H02J 7/02; H02J 7/04;
H02J 13/00; H02J 15/00;** Y02E 60/10

(86) International application number:
**PCT/JP2022/026763**

(87) International publication number:
**WO 2023/026697 (02.03.2023 Gazette 2023/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.08.2021 JP 2021135522**

(71) Applicant: **Hitachi, Ltd.**
**Tokyo 100-8280 (JP)**

(72) Inventors:
• **HATAKEYAMA, Tomoyuki**
  **Tokyo 100-8280 (JP)**
• **YAMAUCHI, Shin**
  **Tokyo 100-8280 (JP)**
• **ITO, Tomomichi**
  **Tokyo 100-8280 (JP)**

(74) Representative: **Mewburn Ellis LLP**
**Aurora Building**
**Counterslip**
**Bristol BS1 6BX (GB)**

(54) **BATTERY PACK SYSTEM AND ENERGY STORAGE SYSTEM**

(57)     Application of a high voltage to a battery cell in which a current is cut off without using a DC/DC converter is suppressed. A battery pack system 10 includes a plurality of basic battery units 60 in which a plurality of battery cells 41 charged by a current supplied from a power supply are connected in series, and one or a plurality of battery groups 61 in which the plurality of basic battery units 60 are connected in parallel, each of the plurality of battery cells 41 includes a current cutoff means that cuts off a current flowing between electrodes of the battery cells 41, and a series number of the plurality of battery cells 41 connected in series of the basic battery unit 60 is determined based on a parallel number of the basic battery units 60, a current It supplied from the power supply, and a resistance component R of the battery cell 41.

**EP 4 395 108 A1**

# FIG. 6

**Description**

Technical Field

The present invention relates to a battery pack system and an energy storage system.

Background Art

An energy storage system connected to a power system and a battery pack system constituting the energy storage system should be safe systems so as not to develop into a fire even if an abnormality has occurred. In general, battery cells constituting the battery pack system are provided with a current cutoff mechanism that stops a current flowing through the battery cells at the time of abnormality. At the time of abnormality of the battery cell, the current flowing through the battery cell can be cut off by the current cutoff mechanism, but in a battery pack system in which a plurality of battery cells are connected in series and in parallel, there is a possibility that a high voltage is applied to the battery cell in which the current is cut off.

PTL 1 discloses a technique in which input sides of a plurality of DC/DC converters are connected in series, and an output side of each of the plurality of DC/DC converters is connected to a battery pack system, so that a voltage applied to each battery pack system is reduced to prevent a high voltage from being applied to a battery cell.

Citation List

Patent Literature

PTL 1: WO 2020/007464 A

Summary of Invention

Technical Problem

However, in PTL 1, since the DC/DC converter is required for the battery pack system, the number of components increases. In addition, efficiency decreases due to switching loss of the DC/DC converter.

Therefore, the present invention provides a technique for suppressing application of a high voltage to a battery cell in which a current is cut off without using a DC/DC converter.

Solution to Problem

A battery pack system of the present invention is a battery pack system including a plurality of basic battery units in which a plurality of battery cells charged by a current supplied from a power supply are connected in series, and one or a plurality of battery groups in which the plurality of basic battery units are connected in parallel. Each of the plurality of battery cells includes a current cutoff means that cuts off a current flowing between electrodes of the battery cells, and a series number of the plurality of battery cells connected in series in the basic battery unit is determined based on a parallel number of the basic battery units, a current supplied from the power supply, and a resistance component of the battery cell.

Advantageous Effects of Invention

According to the present invention, it is possible to suppress application of a high voltage to a battery cell in which a current is cut off without using a DC/DC converter.

Brief Description of Drawings

[FIG. 1] FIG. 1 is a block diagram illustrating an energy storage system of a first embodiment.
[FIG. 2] FIG. 2 is a diagram illustrating an AC/DC converter of the first embodiment.
[FIG. 3] FIG. 3 is a hardware block diagram of a control unit of the first embodiment.
[FIG. 4] FIG. 4 is a diagram illustrating a battery pack system of the first embodiment.
[FIG. 5] FIG. 5 is a diagram illustrating a current cutoff mechanism of a battery cell of the first embodiment.
[FIG. 6] FIG. 6 is a diagram illustrating connection of conventional battery cells and a diagram illustrating connection of battery cells of the first embodiment.
[FIG. 7] FIG. 7 is a diagram illustrating a voltage applied to a battery cell in which a current is cut off.
[FIG. 8] FIG. 8 is a diagram illustrating capacitors that absorb a surge voltage in the first embodiment.
[FIG. 9] FIG. 9 is a diagram for describing effects of the first embodiment.
[FIG. 10] FIG. 10 is a diagram illustrating a battery pack system of a second embodiment.

Description of Embodiments

Embodiments of the present invention will be described in detail with reference to the drawings. In the following embodiments, it goes without saying that the components (including element steps and the like) are not necessarily essential unless otherwise specified or considered to be obviously essential in principle.

<First embodiment>

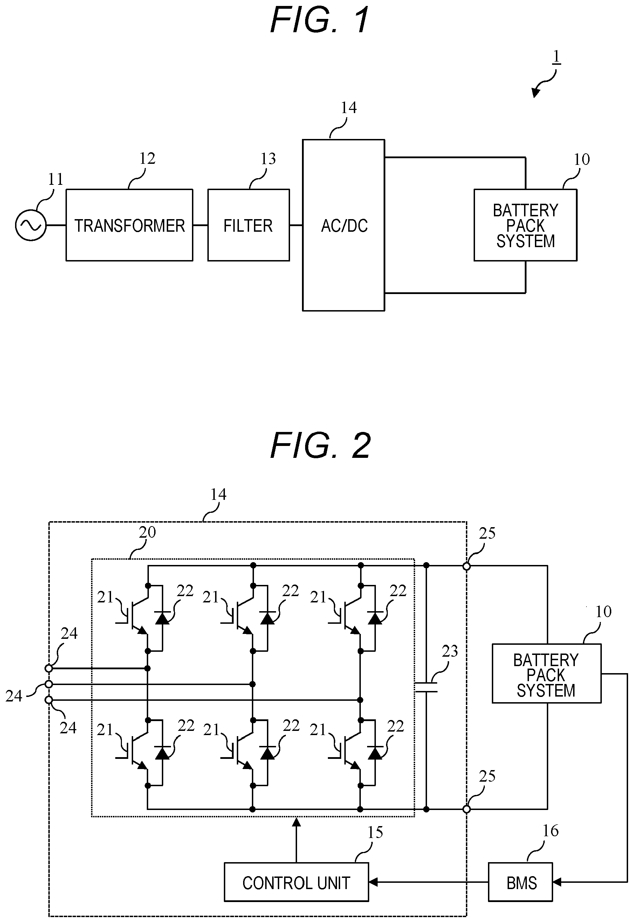

An energy storage system 1 of a first embodiment supplies active power and reactive power to an AC system 11. In addition, the energy storage system 1 may be connected to high-load industrial equipment or the like to improve power quality of the industrial equipment or the like. As illustrated in FIG. 1, the energy storage system 1 includes a transformer 12, a filter 13, an AC/DC converter 14, and a battery pack system 10. The transformer 12 is connected to the AC system 11 and transmits energy between a plurality of windings using electromagnetic induction. The filter 13 removes a predetermined frequency component.

(AC/DC converter 14)

The AC/DC converter 14 is electrically connected to the AC system 11 via the transformer 12 and the filter 13. The AC/DC converter 14 is a two-level converter, a three-level converter, or a multi-level converter. When the AC/DC converter 14 is a two-level converter, the AC/DC converter 14 can be configured with a small number of components. When the AC/DC converter 14 is a three-level converter, the filter 13 can be configured to be small. When the AC/DC converter 14 is a multi-level converter, the filter 13 can be omitted.

The AC/DC converter 14 is a power supply that supplies a current to the battery pack system 10. FIG. 2 illustrates the AC/DC converter 14 including a two-level converter. As illustrated in FIG. 2, the AC/DC converter 14 is a circuit that converts three-phase alternating currents having phases different from each other by 120° into direct currents. An AC-side terminal 24 of the AC/DC converter 14 is connected to the filter 13, and a DC-side terminal 25 is connected to the battery pack system 10. The AC/DC converter 14 includes a bridge circuit 20 that converts an alternating current into a direct current, a smoothing capacitor 23, and a control unit 15. The bridge circuit 20 includes six parallel circuits each including a switching element 21 and a diode 22. Each switching element 21 is controlled to be turned on or off by the control unit 15.

(Control unit 15)

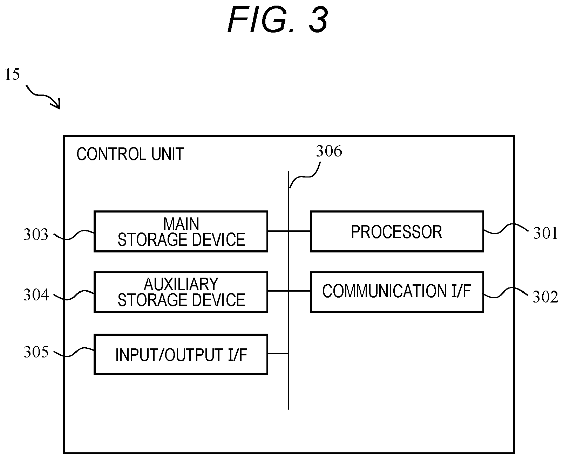

The control unit 15 adjusts the gate pulse signal output by predetermined control to control on or off of the switching element 21 of the AC/DC converter 14. The predetermined control is, for example, constant voltage control, constant current control, or constant power control. The control unit 15 is communicably connected to a battery management system (BMS) 16. Then, the BMS 16 is communicably connected to the battery pack system 10, and collects the state of the battery pack system 10. The state of the battery pack system 10 is, for example, the voltage of a battery cell 41, the temperature of the battery cell 41, the life of the battery cell 41, and the like. In addition, the BMS 16 stores the state of the battery pack system 10 and manages the operation, performance, life, and the like of the battery pack system 10. The BMS 16 transmits a signal based on the collected information of the battery pack system 10 to the AC/DC converter 14. For example, when an abnormality has occurred in the battery cell 41 or when an abnormality is suspected, the BMS 16 transmits a signal indicating the abnormality to the control unit 15. Then, the control unit 15 controls on or off of the switching element 21 according to the signal indicating the abnormality output from the BMS 16, and reduces or stops the current output to the battery pack system 10. As illustrated in FIG. 3, the control unit 15 includes a processor 301, a communication interface (hereinafter, abbreviated as an I/F) 302, a main storage device 303, an auxiliary storage device 304, an input/output I/F 305, and a bus 306 that communicably connects the units described above.

The processor 301 is a central processing unit that controls the operation of each unit of the control unit 15. The processor 301 is, for example, a central processing unit (CPU), a digital signal processor (DSP), an application specific integrated circuit (ASIC), or the like. The processor 301 develops the program stored in the auxiliary storage device 304 in a work area of the main storage device 303 in an executable manner. The main storage device 303 stores a program executed by the processor 301, data processed by the processor, and the like. The main storage device 303 is a flash memory, a random access memory (RAM), a read only memory (ROM), or the like. The auxiliary storage device 304 stores various programs and various data. The auxiliary storage device 304 stores, for example, an operating system (OS), various programs, various tables, and the like. The auxiliary storage device 304 is a silicon disk including a nonvolatile semiconductor memory (flash memory, EPROM (erasable programmable ROM)), a solid state drive device, a hard disk (HDD, hard disk drive) device, or the like.

The communication I/F 302 functions as a means that transmits and receives data to and from the BMS 16 which is an external device. The input/output I/F 305 receives an operation instruction or the like from a user who operates an input device connected to the input/output I/F 305. The input device is, for example, a keyboard, a touch panel, a mouse, a microphone, or the like. Furthermore, for example, a display device such as an LCD, an electroluminescence (EL) panel, or an organic EL panel, or an output device such as a printer or a speaker can be connected to the input/output I/F 305. The input/output I/F 305 outputs data and information processed by the processor 301 and data and information stored in the main storage device 303 and the auxiliary storage device 304 to an output device (for example, a display unit or a printing device (not illustrated)).

(Battery pack system 10)

The battery pack system 10 is a system in which battery cells 41 as minimum units are connected in series and in parallel, and these battery cells 41 are charged by a voltage output from the AC/DC converter 14. In order to use the battery pack system 10 in a power transmission system, the battery pack system 10 needs to have, for example, a charge/discharge capacity of 40 kV. In this case, when the charge/discharge capacity of the battery cell 41 is 4 V, it is necessary to connect 10,000 battery cells 41 in series. The battery cell 41 is, for example, a lithium ion battery or a lead storage battery. The battery pack system 10 is electrically connected to the DC-side terminal 25 of the AC/DC converter 14. The battery pack system 10 is charged by being applied with the DC voltage output from the AC/DC converter 14. The charged battery pack system 10 is discharged to the AC system 11 via the AC/DC converter 14.

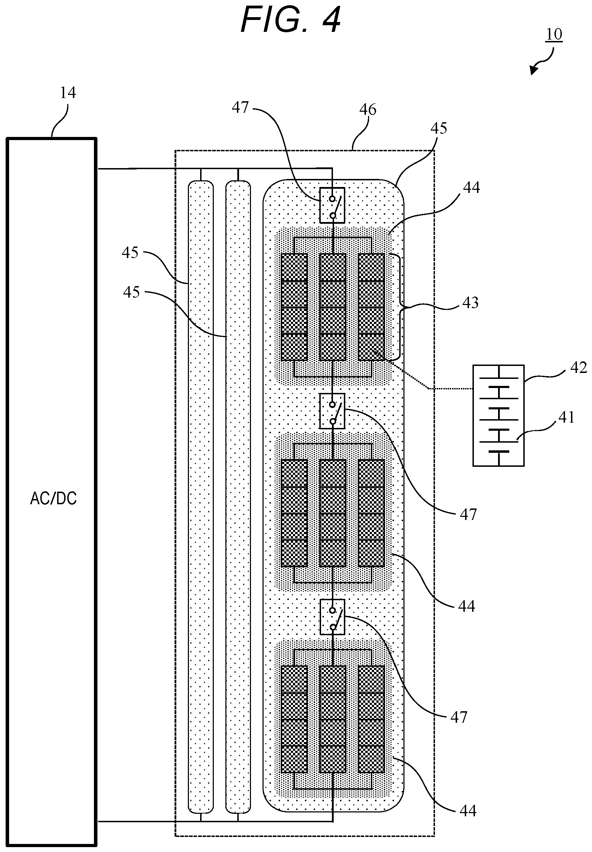

Details of the battery pack system 10 will be described with reference to FIG. 4. The plurality of battery cells 41 connected in series are referred to as a module 42. A plurality of modules 42 connected in series are referred to as a rack 43. A plurality of racks 43 connected in parallel are referred to as an assembly 44. A plurality of assemblies 44 connected in series are referred to as a stack 45. A plurality of stacks 45 connected in parallel are referred to as a storage 46. The storage 46 is the battery pack system 10. The voltage of the battery pack system 10 is determined by the number of the battery cells 41 connected in series. In addition, the capacity of the battery pack system 10 is determined by the number of the battery cells 41 connected in parallel.

A circuit breaker 47 that cuts off an electric current is provided between the assembly 44 and the assembly 44. The circuit breaker 47 may be provided between the module 42 and the module 42, or may be provided between the battery cell 41 and the battery cell 41. The circuit breaker 47 may be hardware that cuts off a current when an overcurrent occurs, or may be a switch that cuts off a current by software control by the control unit 15 or the like.

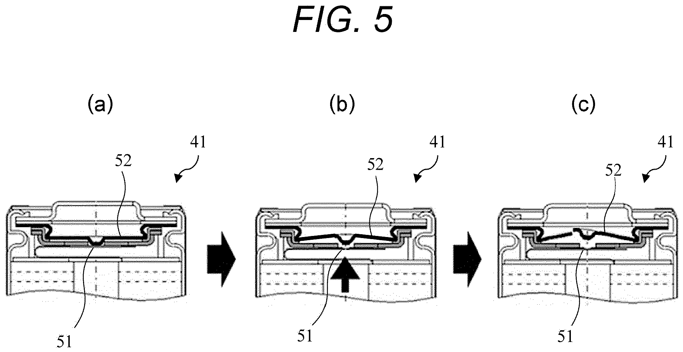

As illustrated in FIG. 5, the battery cell 41 includes a current cutoff mechanism 51 and a safety valve 52. The current cutoff mechanism 51 functions as a current cutoff means of the present invention that cuts off the current flowing between the electrodes. When placed in an overcurrent or high-temperature state, the current cutoff mechanism 51 is deformed by an increase in pressure inside the battery cell 41 to be electrically opened, and cuts off the current flowing between the electrodes of the battery cell 41. In addition, the safety valve 52 ruptures when the internal pressure of the battery cell 41 increases, and releases the gas generated inside the battery cell 41. The battery cell 41 of the first embodiment includes both the current cutoff mechanism 51 and the safety valve 52, but the battery cell 41 may include any one of the current cutoff mechanism 51 and the safety valve 52. In addition, the battery cell 41 may have a configuration other than the current cutoff mechanism 51 as long as the current can be cut off when the battery cell 41 is abnormal. In addition, the current cutoff mechanism 51 may be electrically opened inside the cell when the battery cell 41 is abnormal, or may be a separator that is dissolved to become an insulating material when the battery cell 41 is abnormal. The separator is, for example, a permeable membrane through which Li ions pass, and is dissolved to become an insulating material when the battery cell 41 is abnormal. Also in this case, an electrically high state is established, which can be regarded as electrically open.

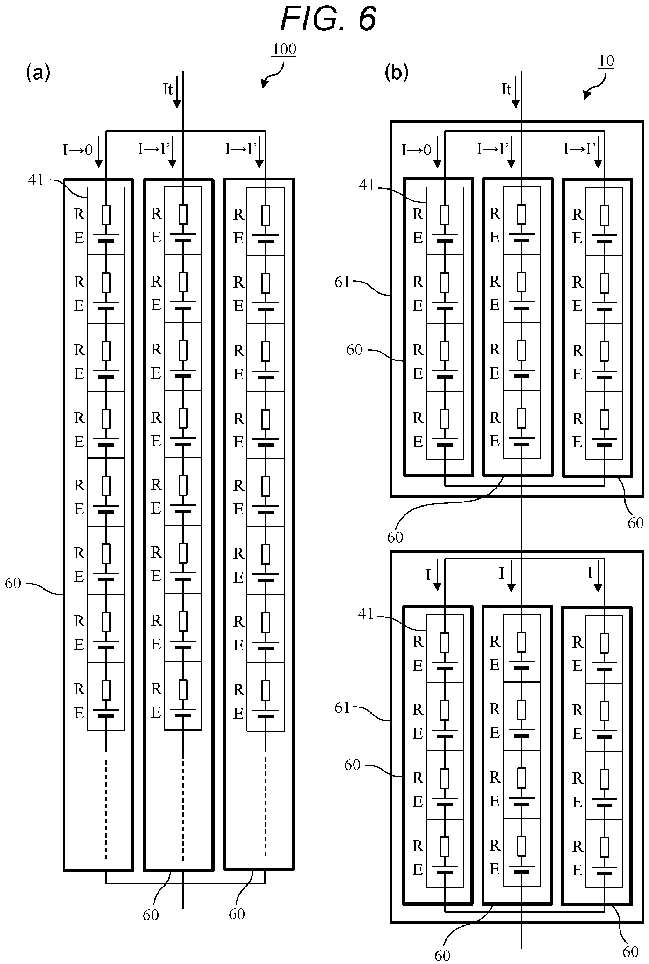

(a) of FIG. 6 illustrates connection of battery cells 41 of a conventional battery pack system 100, and (b) of FIG. 6 illustrates connection of the battery cells 41 of the battery pack system 10 of the first embodiment. In the conventional battery pack system 100, a plurality of battery cells 41 are connected in series, and a plurality of basic battery units 60 having a plurality of battery cells 41 connected in series are provided, and the plurality of basic battery units 60 are connected in parallel. When there is no abnormality in the battery cell 41, a current It supplied from the AC/DC converter 14 to the battery pack system 100 is divided into the plurality of basic battery units 60 connected in parallel, and the current I is supplied to each basic battery unit 60. The basic battery unit 60 of the first embodiment corresponds to the module 42.

In the conventional battery pack system 100 of (a) of FIG. 6, the series number of the battery cells 41 in the basic battery unit 60 is Ns, and the parallel number of the basic battery units 60 is Np. When the current supplied from the AC/DC converter 14 is It, and the current distributed to each basic battery unit 60 is I, It = Np × I is obtained. When a resistance component of each battery cell 41 is R and a battery voltage of the battery cell 41 is E, a voltage across one battery cell 41 is a sum of a voltage drop in the resistance component and the battery voltage (= I × R + E). Since the series number of the battery cells 41 in the basic battery unit 60 is Ns, the voltage V0 of the basic battery unit 60 is V0 = Ns × (I × R + E).

When an abnormality has occurred in a certain battery cell 41 and the current cutoff mechanism 51 or the safety valve 52 operates, the current flowing through the battery cell 41 and the basic battery unit 60 including the battery cell 41 is cut off. On the other hand, when the AC/DC converter 14 operates under constant current control, the current It supplied from the AC/DC converter 14 is constant. Therefore, when the current flowing through the basic battery unit 60 in which no abnormality has occurred is I', I' = It/(Np - 1) is satisfied.

In the voltage V2 of the basic battery unit 60 in which no abnormality has occurred, since the flowing current I' is larger than I at the normal time, the voltage drop in the resistance component R is large, and V2 = Ns × (I' × R + E). In addition, the voltage V1 of the basic battery unit 60 including the battery cell 41 in which an abnormality has occurred is V1 = Ns × E because there is no voltage drop in the resistance component R due to the cutoff of the current. Therefore, a voltage ΔV applied to the battery cell 41 in which an abnormality has occurred is as follows.

$$\Delta V = V2 - V1$$

$$= Ns \times (I' \times R + E) - Ns \times E$$

$$= Ns \times I' \times R \cdots (1)$$

Then, when $I' = It/(Np - 1)$ is substituted into Formula (1),

$$\Delta V = Ns \times It/(Np - 1) \times R \cdots (2)$$

is obtained.

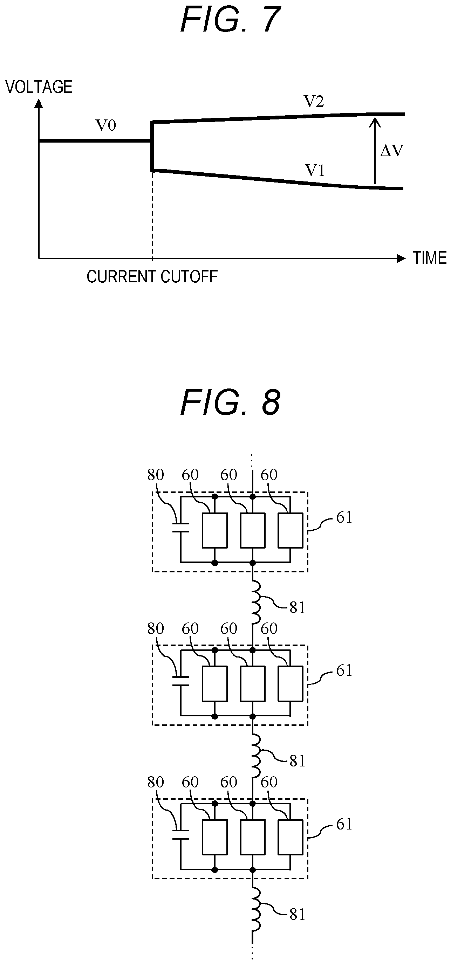

The relationship between the voltage V0 of the basic battery unit 60 at the normal time, the voltage V1 of the basic battery unit 60 including the battery cell 41 in which an abnormality has occurred, the voltage V2 of the basic battery unit 60 in which no abnormality has occurred, and the voltage ΔV applied to the battery cell 41 in which an abnormality has occurred is as illustrated in FIG. 7.

When, for example,

resistance component R of battery cell 41 = 0.001 Ω, battery voltage E of battery cell 41 = 4.0 V, current It supplied from AC/DC converter 14 to battery pack system 10 = 100 A, series number Ns of battery cells 41 in basic battery unit = 10,000, and parallel number Np of basic battery units = 3,

$$\Delta V = 10,000 \times 100/(3 - 1) \times 0.001 = 500 \text{ V}$$

is obtained. That is, under the conditions described above, 500 V is applied to the battery cell 41 in which an abnormality has occurred.

As indicated by Formula (2) described above, ΔV calculated from the series number Ns of the battery cells 41, the parallel number Np of the basic battery units 60, the current It, and the resistance component R is applied to the battery cell 41 in which an abnormality has occurred. It is necessary to perform adjustment so that the voltage ΔV applied to the battery cell 41 does not exceed the insulation performance of the battery cell 41 (the insulation performance of the battery cell 41 in consideration of the safety factor is defined as Th) so that the battery cell 41 is not dielectric broken by the voltage ΔV applied to the battery cell 41 in which an abnormality has occurred. That is, the voltage ΔV applied to the battery cell 41 satisfies the following formula.

$$\Delta V < Th \cdots (3)$$

When Formula (2) described above is substituted into Formula (3) described above,

$$Ns \times It/(Np - 1) \times R < Th$$

is obtained,
and then, the series number Ns of the battery cells 41 in the basic battery unit 60 satisfies Formula (4) described below.

$$Ns < Th \times (Np - 1)/(It \times R) \cdots (4)$$

The series number Ns of the battery cells 41 in the basic battery unit 60 is determined on the basis of Formula (4) described above. Since the insulation performance Th of the battery cell 41 depends on the performance of the selected battery cell 41, the series number Ns of the battery cells 41 is determined based on the parallel number Np, the current It, and the resistance component R of the basic battery unit 60. In the first embodiment, as illustrated in (b) of FIG. 6, the battery cells 41 are connected in series in the determined series number Ns or less to form the basic battery unit 60. Then, the basic battery units 60 having the battery cells 41 connected in the determined series number Ns or less are connected in parallel. The battery groups 61 in which a plurality of basic battery units 60 are connected in parallel are connected in series to constitute the battery pack system 10. In the example of (b) of FIG. 6, battery groups 61 in which three basic battery units 60 in which four battery cells 41 are connected in series are connected in parallel are connected in series. Note that, as the series number Ns, it is desirable to adopt a maximum value satisfying Formula (4) described above. This is because, if the series number Ns of the battery cells 41 is reduced, the voltage ΔV applied to the battery cell 41 in which an abnormality has occurred is reduced, but it is necessary to perform parallel connection for every small series number Ns, the circuit configuration becomes complicated, and the connection work of the basic battery unit 60 becomes complicated. Therefore, as the series number Ns of the battery cells 41 in the basic battery unit 60 of the first embodiment, a maximum value satisfying Formula (4) described above is adopted. Note that the resistance component R varies depending on the type of battery, and also varies even in the same type of battery, and also varies depending on the environment such as temperature. Therefore, it is desirable to set the maximum value within an assumed range.

The conventional battery pack system 100 illustrated in (a) of FIG. 6 and the battery pack system 10 of the first embodiment illustrated in (b) of FIG. 6 are equivalent in terms of charge/discharge capacity, but the voltage applied to the battery cell 41 in which the current is cut off is smaller in the battery cell 41 of the battery pack system 10 of the first embodiment. In the battery pack system 10 of the first embodiment illustrated in (b) of FIG.

6, the number of battery cells 41 constituting the basic battery unit 60 is four, but the series number is an example. In the first embodiment, as described above, the series number of the battery cells 41 is determined based on at least one of the parallel number Np of the basic battery units 60, the current It supplied from the AC/DC converter 14, and the resistance component R of the battery cells 41.

As illustrated in FIG. 8, the battery pack system 10 includes a capacitor 80 connected in parallel with the basic battery unit 60. When the current flowing through the battery cell 41 is cut off by the current cutoff mechanism 51 or the safety valve 52 of the battery cell 41, a surge voltage is generated by the inductance component 81 of the wiring. In particular, when the battery groups 61 are connected in series by a long wiring, the inductance component 81 of the wiring increase. Since the surge voltage (Ldi/dt) also increases as the inductance component 81 of the wiring increases, the battery pack system 10 includes the capacitor 80 as an absorption means that absorbs the surge voltage. As long as the circuit can be protected from the surge voltage, the capacitor 80 may be a varistor, a Zener diode, or a combination thereof.

The battery pack system 10 may include the circuit breaker 47 provided between the battery group 61 and the battery group 61 to cut off a current. The circuit breaker 47 corresponds to the current cutoff mechanism of the present invention. Details of the circuit breaker 47 are as illustrated in FIG. 4.

(Effects of first embodiment)

In the first embodiment, the series number Ns of the battery cells 41 in the basic battery unit 60 is determined based on the parallel number Np of the basic battery units 60, the current It supplied from the AC/DC converter 14, and the resistance component R of the battery cells 41. As a result, for example, when an abnormality has occurred in the battery cell 41 of any one of the basic battery units 60, it is possible to prevent $\Delta V$ applied to the battery cell 41 in which an abnormality has occurred from becoming larger than the threshold (value indicating the insulation performance of the battery cell 41). As a result, it is possible to suppress application of a high voltage to the battery cell 41 in which an abnormality has occurred without using the DC/DC converter, and it is possible to suppress dielectric breakdown of the battery cell 41 due to $\Delta V$

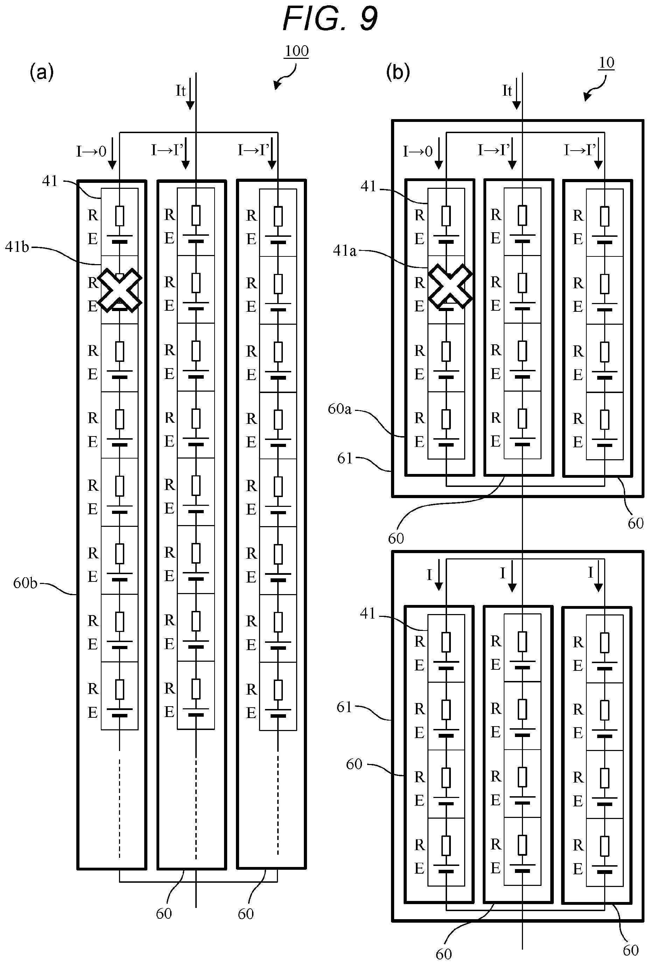

In addition, by connecting the determined series number Ns of the basic battery units 60 in parallel, as illustrated in FIG. 9, the number of the battery cells 41 through which no current flows can be reduced. In the conventional battery pack system 100 of FIG. 9(a), when an abnormality has occurred in a battery cell 41b, at least eight battery cells 41 constituting a basic battery unit 60b including the battery cell 41b cannot be used. On the other hand, in the first embodiment of FIG. 9(b), when an abnormality has occurred in a battery cell 41a, four battery cells 41 constituting a basic battery unit 60a including the battery cell 41a cannot be used. That is, in the first embodiment, even if an abnormality has occurred in the battery cell 41a, the number of unusable battery cells 41 can be reduced as compared with the conventional battery pack system 100.

Since the battery pack system 10 includes the capacitor 80 that absorbs the surge voltage, even if the current is cut off by the current cutoff mechanism 51 or the safety valve 52 of the battery cell 41, the circuit can be protected from the surge voltage.

In addition, by providing the circuit breaker 47 between the battery group 61 and the battery group 61, the current can be cut off when an abnormality such as exceeding the allowable current of the circuit has occurred.

In addition, the communication I/F 302 of the control unit 15 can receive a signal based on the state of the battery pack system 10 from the BMS 16, and the BMS 16 can store and manage the state of the battery pack system 10.

The control unit 15 is communicably connected to the BMS 16, and can receive a signal indicating an abnormality from the BMS 16. Then, the control unit 15 can control on or off of the switching element 21 according to the signal indicating the abnormality to reduce or stop the current output to the battery pack system 10.

<Second embodiment>

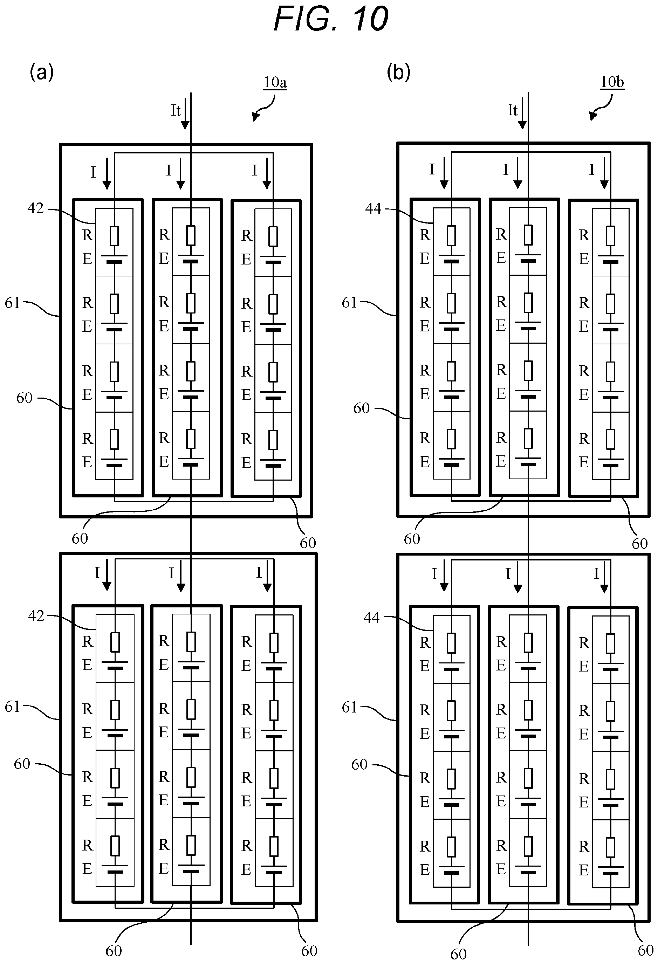

In the first embodiment, the basic battery units 60 having the battery cells 41 connected in the determined series number or less are connected in parallel. When circuit connection is difficult in units of battery cells 41 and circuit change in units of modules 42 is easy, circuit connection may be performed in units of modules 42. As illustrated in FIG. 10(a), a battery pack system 10a of a second embodiment includes a plurality of modules 42 connected in series. The battery pack system 10a includes a battery group 61 in which basic battery units 60 in which the plurality of modules 42 are connected in series are connected in parallel. That is, the basic battery unit 60 of the second embodiment corresponds to the rack 43. A plurality of battery groups 61 are connected in series. When the module 42 is formed by connecting N1 battery cells 41 in series and the basic battery unit 60 is formed by connecting M1 modules 42 in series, N1 × M1 battery cells 41 are connected in series in the basic battery unit 60 of the second embodiment. The series number of the battery cells 41 is determined based on the parallel number Np of the basic battery units 60, the current It supplied from the AC/DC converter 14, and the resistance component R of the battery cells 41. In the second embodiment, the number of the plurality of modules 42 in the basic battery unit 60 is determined such that the series number determined based on Formula (4) described above is N1 × M1 or less. For example, when the determined series number is 100 and 23 battery cells 41 are connected in series in the module 42, the number of the modules 42 is determined to be 4 so as to be 100 or less.

Further, as illustrated in a battery pack system 10b of FIG. 10(b), the module 42 described above can be replaced with the assembly 44. In this case, the basic battery unit 60 in FIG. 10(b) corresponds to the stack 45. Note that details of FIG. 10(b) are similar to those of FIG. 10(a), and thus description thereof is omitted.

Note that the present invention is not limited to the above embodiments, and includes various modifications. The above embodiments have been described in detail for easy understanding of the present invention, and are not necessarily limited to those having all the described configurations.

Further, a part of the configuration of one embodiment can also be replaced with the configuration of another embodiment, and further, the configuration of one embodiment can also be added to the configuration of another embodiment. In addition, it is also possible to add, delete, and replace other configurations for a part of the configuration of each embodiment.

Reference Signs List

| 1 | energy storage system |
|---|---|
| 10, 10a, 10b | battery pack system |
| 11 | AC system |
| 12 | transformer |
| 13 | filter |
| 14 | AC/DC converter |
| 15 | control unit |
| 16 | BMS |
| 20 | bridge circuit |
| 21 | switching element |
| 22 | diode |
| 23 | smoothing capacitor |
| 41 | battery cell |
| 42 | module |
| 43 | rack |
| 44 | assembly |
| 45 | stack |
| 46 | storage |
| 51 | current cutoff mechanism |
| 52 | safety valve |
| 60 | basic battery unit |
| 61 | battery group |
| 80 | capacitor |
| 81 | inductance component |
| 301 | processor |
| 302 | communication I/F |
| 303 | main storage device |
| 304 | auxiliary storage device |
| 305 | input/output I/F |
| 306 | bus |

**Claims**

1. A battery pack system including a plurality of basic battery units in which a plurality of battery cells charged by a current supplied from a power supply are connected in series, and one or a plurality of battery groups in which the plurality of basic battery units are connected in parallel,

   wherein each of the plurality of battery cells includes a current cutoff means that cuts off a current flowing between electrodes of the battery cells, and
   a series number of the plurality of battery cells connected in series in the basic battery unit is determined based on a parallel number of the basic battery units, a current supplied from the power supply, and a resistance component of the battery cell.

2. The battery pack system according to claim 1, wherein the series number of the plurality of battery cells connected in series in the basic battery unit is determined based on the following formula:

$$Ns < Th \times (Np - 1)/(It \times R)$$

   (Ns is a series number of the plurality of battery cells connected in series of the basic battery unit, Th is a value indicating insulation performance of the battery cell, It is a current supplied from the power supply, Np is a parallel number of the basic battery unit, and R is a resistance component of the battery cell).

3. The battery pack system according to claim 1, further comprising an absorption means that absorbs a surge voltage generated when a current is cut off by the current cutoff means of the battery cell.

4. The battery pack system according to claim 3, wherein the absorption means is a capacitor, a varistor, a Zener diode, or a combination thereof connected in parallel to the basic battery unit.

5. The battery pack system according to claim 1, wherein the battery group in which the plurality of basic battery units are connected in parallel is connected in series via a current cutoff mechanism.

6. An energy storage system comprising:

   the battery pack system according to claim 1; and
   a power supply that supplies a current to the battery pack system.

7. The energy storage system according to claim 6, wherein the power supply reduces a current supplied to the battery pack system when the current is cut off by the current cutoff means of the battery cell.

8. The energy storage system according to claim 6, further comprising an external device that manages information of the battery pack system,
wherein the external device transmits a signal based on the information of the battery pack system to the power supply.

# FIG. 1

# FIG. 2

# FIG. 3

15

CONTROL UNIT                                    306

303 — MAIN STORAGE DEVICE        PROCESSOR — 301

304 — AUXILIARY STORAGE DEVICE        COMMUNICATION I/F — 302

305 — INPUT/OUTPUT I/F

# FIG. 4

# FIG. 5

(a)                     (b)                     (c)

# FIG. 6

## FIG. 7

VOLTAGE

V0

V2

V1

ΔV

CURRENT CUTOFF

TIME

## FIG. 8

80  60  60  60

61

81

80  60  60  60

61

81

80  60  60  60

61

81

# FIG. 9

# FIG. 10

(a)

(b)

## INTERNATIONAL SEARCH REPORT

| International application No. |
| --- |
| **PCT/JP2022/026763** |

**A. CLASSIFICATION OF SUBJECT MATTER**

*H02J 7/00*(2006.01)i; *H01M 50/50*(2021.01)i; *H01M 50/509*(2021.01)i; *H01M 50/583*(2021.01)i; *H02H 7/18*(2006.01)i; *H02J 7/02*(2016.01)i; *H02J 7/04*(2006.01)i; *H02J 13/00*(2006.01)i; *H02J 15/00*(2006.01)i
FI: H02J7/00 301E; H01M50/50 201Z; H01M50/509; H01M50/583; H02H7/18; H02J7/00 302C; H02J7/02 F; H02J7/04 K; H02J13/00 301A; H02J13/00 311A; H02J15/00 D

According to International Patent Classification (IPC) or to both national classification and IPC

**B. FIELDS SEARCHED**

Minimum documentation searched (classification system followed by classification symbols)

H02J7/00; H01M50/50; H01M50/509; H01M50/583; H02H7/18; H02J7/02; H02J7/04; H02J13/00; H02J15/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2000-48865 A (HITACHI, LTD.) 18 February 2000 (2000-02-18)<br>paragraphs [0004]-[0044], fig. 1-5 | 1-8 |
| A | JP 2001-135348 A (NGK INSULATORS, LTD.) 18 May 2001 (2001-05-18)<br>paragraphs [0013]-[0029], fig. 3 | 1-8 |
| A | JP 2016-073009 A (PANASONIC IP MANAGEMENT CORP.) 09 May 2016 (2016-05-09)<br>paragraphs [0010]-[0053], fig. 1-4 | 1-8 |

☐ Further documents are listed in the continuation of Box C.　☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **15 September 2022** | **27 September 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/026763**

| Patent document cited in search report | | | Publication date (day/month/year) | Patent family member(s) | Publication date (day/month/year) |
|---|---|---|---|---|---|
| JP | 2000-48865 | A | 18 February 2000 | (Family: none) | |
| JP | 2001-135348 | A | 18 May 2001 | (Family: none) | |
| JP | 2016-073009 | A | 09 May 2016 | EP 3200310 A1 paragraphs [0010]-[0053], fig. 1-4 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020007464 A